(19) Europäisches Patentamt
European Patent Office
Office européen des brevets

(11) **EP 2 743 634 A1**

(12) **EUROPEAN PATENT APPLICATION**

(43) Date of publication:
**18.06.2014 Bulletin 2014/25**

(51) Int Cl.:
**G01B 9/02** *(2006.01)* **G01B 11/30** *(2006.01)*
**G01B 11/24** *(2006.01)*

(21) Application number: **13196082.5**

(22) Date of filing: **06.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.12.2012 JP 2012270585**

(71) Applicant: **CANON KABUSHIKI KAISHA**
**Ohta-ku**
**Tokyo 146-8501 (JP)**

(72) Inventor: **Nishikawa, Yuya**
**Ohta-ku Tokyo (JP)**

(74) Representative: **Walker, Philip Martin**
**Canon Europe Ltd**
**European Patent Department**
**3 The Square**
**Stockley Park**
**Uxbridge, Middlesex UB11 1ET (GB)**

(54) **Interference measuring apparatus and interference measuring method**

(57) An interference measuring apparatus (1) that measures a distance to a surface to be inspected (3a) is provided, and includes a light dividing unit (13) configured to divide each of the plurality of light fluxes into light to be inspected and reference light; an objective lens (24) through which the light to be inspected is transmitted; a photoelectric conversion element (11,12) configured to receive interference light between the light to be inspected and the reference light for each of the plurality of light fluxes and output an interference signal obtained by converting the interference light into an electrical signal; and a calculation unit (8) configured to calculate the distance based on a phase obtained by subtracting a defocused wavefront from a phase component of complex amplitude at the pupil position of the objective lens (24) for each of the plurality of light fluxes by using the interference signal.

FIG. 2

START

S101 — CALCULATE SHAPE H (x, y) OF SURFACE TO BE INSPECTED FROM PHASE DIFFERENCE ($\Phi_1 - \Phi_2$) BETWEEN TWO WAVELENGTHS

S102 — SET AREA FOR DEFOCUS CORRECTION BASED ON RESULT IN STEP S101

S103 — HAS CALCULATION IN STEP S104 AND SUBSEQUENT STEPS BEEN EXECUTED FOR ALL SET AREAS? NO / YES

S104 — CALCULATE COMPLEX AMPLITUDES $E_1$ (x, y) AND $E_2$ (x, y) IN DETECTION SURFACE

S105 — CALCULATE COMPLEX AMPLITUDES $PE_1$ (x, y) AND $PE_2$ (x, y) IN PUPIL PLANE

S106 — CALCULATE DEFOCUS WAVEFRONTS $W_1$ (x, y) AND $W_2$ (x, y)

S107 — SUBTRACT DEFOCUS WAVEFRONT FROM PHASE COMPONENT OF COMPLEX AMPLITUDE IN PUPIL PLANE

S108 — CALCULATE COMPLEX AMPLITUDES $E'_1$ (x, y) AND $E'_2$ (x, y) OF DETECTION SURFACE AFTER CORRECTION

S109 — RECALCULATE SHAPE H' (x, y) OF SURFACE TO BE INSPECTED FROM PHASE DIFFERENCE ($\Phi'_1 - \Phi'_2$) BETWEEN TWO WAVELENGTHS

END

EP 2 743 634 A1

**Description**

BACKGROUND OF THE INVENTION

Field of the Invention

The present invention relates to an interference measuring apparatus and an interference measuring method.

Description of the Related Art

Conventionally, interferometers (interference measuring apparatuses) using a light wave are known as apparatuses for measuring the shape of an object or the like with high accuracy. In such an interferometer using light of single wavelength, if a surface to be inspected has a certain roughness (surface roughness), a speckle pattern caused by the roughness of the surface has a random phase with a standard deviation greater than 2n, resulting in an increase in measurement error. Accordingly, there has been proposed a multi-wavelength interferometer for measuring a rough surface profile on an object to be inspected using a plurality of different wavelength lights. In an article entitled "Rough surface interferometry with a two-wavelength heterodyne speckle interferometer" by A. F. Fercher, H. Z. Hu, and U. Vry, Applied Optics, Vol. 24, No. 14, p. 2181-2188, 1985, there is described a multi-wavelength interferometer which synthesizes phases of wavelengths from an interference measurement result of a plurality of different wavelengths. According to the article entitled "Rough surface interferometry with a two-wavelength heterodyne speckle interferometer" by A. F. Fercher, H. Z. Hu, and U. Vry, Applied Optics, Vol. 24, No. 14, p. 2181-2188, 1985, if there is a correlation between speckle patterns of two wavelengths, it is possible to obtain information related to a macroscopic surface profile and a microscopic surface roughness on the basis of a phase difference between the two wavelengths. In an article entitled "High-order statistical properties of speckle fields and their application rough-surface interferometry" by U. Vry and F. Fercher, J. Opt. Soc. Am. A, Vol. 3, No. 7, p. 988-1000, 1986, there is described that a correlation of speckle pattern between two wavelengths depends on a synthesized wavelength of the two wavelengths. According to the article entitled "High-order statistical properties of speckle fields and their application rough-surface interferometry" by U. Vry and F. Fercher, J. Opt. Soc. Am. A, Vol. 3, No. 7, p. 988-1000, 1986, the smaller the synthesized wavelength $\lambda$, the smaller the correlation of speckle pattern between two wavelengths, and conversely, the greater the synthesized wavelength $\lambda$, the greater the correlation of speckle pattern between two wavelengths. Here, the synthesized wavelength $\lambda$ is a value represented by $\lambda = \lambda1 \times \lambda2 / (\lambda1 - \lambda2)$ when the two wavelengths are $\lambda1$ and $\lambda2$ ($\lambda1 > \lambda2$). In this way, even when a surface to be inspected is a rough surface which is difficult to be measured by a single wavelength interferometer with high accuracy, the surface to be inspected can be measured with accuracy by using a multi-wavelength interferometer.
On the other hand, in an article entitled "Speckle decorrelation in surface profilometry by wavelength scanning interferometry" by I. Yamaguchi, A. Yamamoto, and S. Kuwamura, Applied Optics, Vol. 37, No. 28, p. 6721-6728, 1998, there is described that the correlation of speckle pattern between two wavelengths decreases in the multi-wavelength interferometer as described above when a surface to be inspected is not aligned with the focus position of an objective lens. According to the article entitled "Speckle decorrelation in surface profilometry by wavelength scanning interferometry" by I. Yamaguchi, A. Yamamoto, and S. Kuwamura, Applied Optics, Vol. 37, No. 28, p. 6721-6728, 1998, the coherent coefficient $\mu$ of speckle pattern between two wavelengths taking into account defocus amount is represented by (Formula 1).

[Formula 1]

$$\mu = \exp\left(-2\sigma_h^2 \Delta k^2\right) \frac{C(\zeta) + iS(\zeta)}{\zeta}$$

Here, $\zeta$ is represented by (Formula 2), $\sigma_h$ represents a surface roughness (RMS) of a surface to be inspected, C represents Fresnel cosine integral, S represents Fresnel sine integral, z represents defocus amount, D represents depth of focus, k represents wave number, and $\Delta k$ represents a wave-number difference between two wavelengths.

[Formula 2]

$$\zeta = 2\left[\frac{z}{D}\frac{\Delta k}{k}\left(1-\frac{\Delta k}{k}\right)^{-1}\right]^{\frac{1}{2}}$$

According to the article entitled "High-order statistical properties of speckle fields and their application rough-surface interferometry" by U. Vry and F. Fercher, J. Opt. Soc. Am. A, Vol. 3, No. 7, p. 988-1000, 1986, the relationship between the coherent coefficient $\mu$ and the phase measurement error $\sigma_\varphi$ is represented by (Formula 3).

[Formula 3]

$$\sigma_\phi = \left(\frac{\pi^2}{3} - \pi\arcsin|\mu| + \arcsin^2|\mu| - \frac{1}{2}\sum_{n=1}^{\infty}\frac{\mu^{2n}}{n^2}\right)^{\frac{1}{2}}$$

3/14

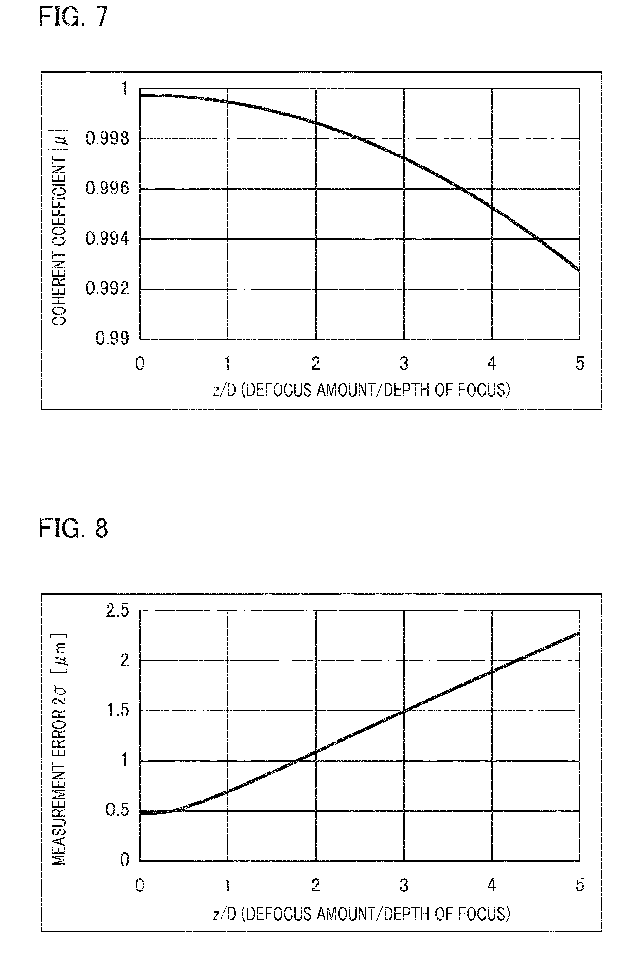

Here, assume that two wavelengths $\lambda 1$ and $\lambda 2$ are 785 nm and 795 nm, respectively, (the synthesized wavelength $\lambda$ is 62 $\mu$m) and the surface roughness is 0.1 $\mu$m in (Formula 1) to (Formula 3). The relationship between z/D (defocus amount / depth of focus) and the coherent coefficient $|\mu|$ at this time is shown in FIG. 7. Likewise, the relationship between z/D and the measurement error 2σ is shown in FIG. 8. In particular, as can be seen from FIG. 8, when the measurement accuracy is degraded due to an increase in defocus amount and thus the measurement error needs to be suppressed to, for example, 1 $\mu$m or less, z/D needs to be 2 or less. As described above, even when a multi-wavelength interferometer is used for rough surface measurement, it is difficult to perform an accurate measurement due to a decrease in the correlation between two wavelengths if a surface to be inspected is not significantly aligned with the focus position of an objective lens.

SUMMARY OF THE INVENTION

The present invention has been made in view of the above circumstances and has an object to provide an interference measuring apparatus that is advantageous for accurately measuring a surface to be inspected even when the surface to be inspected is a rough surface.
The present invention in its first aspect provides an interference measuring apparatus as specified claims 1 to 7.
The present invention in its second aspect provides an interference measuring method as specified claim 8.
According to the present invention, an interference measuring apparatus that is advantageous for accurately measuring a surface to be inspected even when the surface to be inspected is a rough surface may be provided.
Further features of the present invention will become apparent from the following description of embodiments with reference to the attached drawings.

BRIEF DESCRIPTION OF THE DRAWINGS

FIG. 1 is a diagram illustrating a configuration of an interference measuring apparatus according to a first embodiment of the present invention.
FIG. 2 is a flowchart illustrating the procedure of shape calculation according to the first embodiment.
FIG. 3 is a diagram illustrating an shape of an object to be measured.
FIG. 4 is a diagram illustrating a configuration of an interference measuring apparatus according to a second embodiment of the present invention.
FIG. 5 is a diagram illustrating a part of the configuration of the interference measuring apparatus according to the second embodiment.
FIG. 6 is a flowchart illustrating the procedure of length measurement value calculation according to the second embodiment.

FIG. 7 is a graph illustrating a relationship between a defocus amount and a coherent coefficient.
FIG. 8 is a graph illustrating a relationship between a defocus amount and a measurement error.

DESCRIPTION OF THE EMBODIMENTS

Hereinafter, preferred embodiments of the present invention will be described with reference to the drawings.

First Embodiment

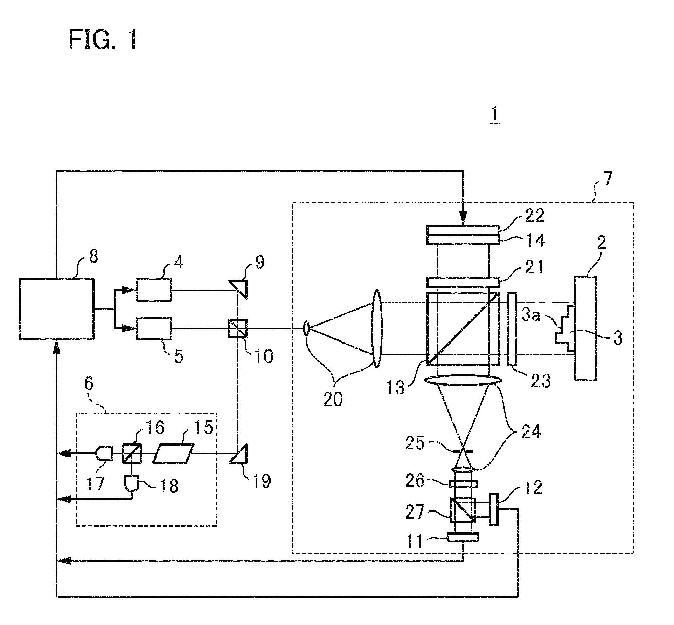

Firstly, a description will be given of an interference measuring apparatus according to a first embodiment of the present invention. FIG. 1 is a schematic diagram illustrating a configuration of an interference measuring apparatus 1 according to the present embodiment. The interference measuring apparatus 1 is a multi-wavelength interferometer that measures the shape (the distance among a plurality of points) of a surface to be inspected 3a of an object (object to be measured) 3 placed on a placing table 2 by using a plurality of (in the present embodiment, two as an example) light fluxes (light waves) whose wavelengths are different from each other. The interference measuring apparatus 1 firstly includes a first light source (first laser light source) 4 that emits first light (first laser) having a first fixed wavelength and a second light source (second laser light source) 5 that emits second light (second laser) having a second fixed wavelength different from the first fixed wavelength. Each of the first light source 4 and the second light source 5 may emit, for example, a DFB (distributed-feedback) semiconductor laser. While, in the present embodiment, the first light source 4 and the second light source 5 are separate element independent of each other, a plurality of semiconductor lasers may also be integrated in one element in the same manner as in a multi-wavelength light source used in optical communication. In this case, there are advantages in cost and size. Furthermore, the first light source 4 and the second light source 5 are not necessarily limited to use the DFB laser but may be other light sources, which are capable of performing interference measurement, having a narrow spectral line width.

Also, the interference measuring apparatus 1 includes a wavelength control unit 6, an interferometer unit 7, and a control unit 8. The light flux of first light emitted from the first light source 4 is reflected by a mirror 9 and then is divided (branched) by a beam splitter 10. One of the divided light fluxes is guided to the wavelength control unit 6, whereas the other one of the divided light fluxes is guided to the interferometer unit 7. On the other hand, the light flux of second light emitted from the second light source 5 enters a beam splitter 10 and then the light flux is simultaneously divided into two light fluxes such that the optical axis is the same as that of the first light. Here, one of the divided light fluxes is guided to the wavelength control unit 6, whereas the other one of the divided light fluxes is guided to the interferometer unit 7. The interferometer unit 7 further includes a first detector 11 and a second detector 12 each consisting of a plurality of pixels, and a polarization beam splitter (light dividing unit) 13 serving as a light flux dividing element, which will be described in detail hereinafter. As the first detector 11 and the second detector 12, a photoelectric conversion element (imaging element) such as a CCD sensor, a CMOS sensor, or the like may be employed. The light fluxes of the first light and the second light are separated into a light flux to be inspected (light to be inspected) and a reference light flux (reference light) by the polarization beam splitter 13. The first detector 11 receives interference light of the first light obtained by causing interference of the light flux to be inspected from the surface to be inspected 3a and the reference light flux from the reference surface 14 and then converts the interference light into an electrical signal to thereby output the electrical signal (interference signal). On the other hand, the second detector 12 receives interference light of the second light obtained by causing interference of the light flux to be inspected from the surface to be inspected 3a and the reference light flux from the reference surface 14 and then outputs the interference signal of the second light obtained by converting the interference light into an electrical signal. Then, the control unit (calculation unit) 8 executes calculation, which will be described in detail hereinafter, based on the interference signals of the first light and the second light to thereby determine the shape (the distance to the surface to be inspected 3a) of the surface to be inspected 3a.
The wavelength control unit 6 includes a gas cell 15 serving as a wavelength reference element, a spectroscopic element 16, a third detector 17, and a fourth detector 18. The light flux which is divided by the beam splitter 10 and then is reflected by a mirror 19 to thereby be guided into the wavelength control unit 6 passes through the gas cell 15 and then is separated into the light fluxes of the first light and the second light by the spectroscopic element 16. The light quantities of the light flux of the first light and the light flux of the second light after passing through the gas cell 15 are detected by the third detector 17 and the fourth detector 18, respectively. The control unit 8 executes control such that the wavelength of the firth light is stabilized to a wavelength $\lambda_1$ which is an absorption line of the gas cell 15 based on a signal output from the third detector 17. Here, the wavelength stabilization is performed, for example, by adjusting the wavelength of the first light such that transmission intensity of the third detector 17 becomes constant. As a wavelength adjusting method, for example, a method for modulating an injection current or a method for controlling temperature, or the like is used. Likewise, the control unit 8 executes control such that the wavelength of the second light is stabilized to a wavelength $\lambda_2$ which is an absorption line of the gas cell 15 based on a signal output from the fourth detector 18. While, in the present embodiment, the accuracy of the wavelength is guaranteed by using only the gas cell, an etalon may be used instead of the gas cell or both the gas cell and the etalon may also be used.

The interferometer unit 7 includes various types of optical elements in addition to the first detector 11, the second detector 12, and the polarization beam splitter 13 described above. The light flux which is divided by the beam splitter 10 and is guided into the interferometer unit 7 is expanded to a desired beam diameter by a beam expander 20 and is further divided into a reference light flux incident on the reference surface 14 and a light flux to be inspected incident on the surface to be inspected 3a by the polarization beam splitter 13. The reference light flux is changed into circularly polarized light by being passed through a first λ/4 plate 21 and then is changed into reverse circularly polarized light by being reflected by the reference surface 14. Then, the reference light flux passes through the first λ/4 plate 21 again, is changed into linearly polarized light having a polarization plane rotated by 90 degrees from that upon incidence, and then passes through the polarization beam splitter 13. Note that the reference surface 14 is placed on a piezoelectric element (optical path length difference changing element) 22 and fringe scanning can be performed in synchronous with the detection timing of the first detector 11 and the second detector 12 by applying voltage from the control unit 8 to the piezoelectric element 22 upon measuring an interference signal. On the other hand, the light flux to be inspected is changed into circularly polarized light by being passed through a second λ/4 plate 23 and then is changed into reverse circularly polarized light by being reflected by the surface to be inspected 3a of the object 3 placed on the placing table 2. Then, the light flux to be inspected passes through the second λ/4 plate 23 again, is changed into linearly polarized light having a polarization plane rotated by 90 degrees from that upon incidence, and then is reflected by the polarization beam splitter 13. The light flux to be inspected and the reference light flux are synthesized (multiplexed) by the polarization beam splitter 13, and then, the resulting light flux passes through an objective lens 24 and an aperture 25. In the present embodiment, in order to maximize the correction effect, it is preferable that the size of the aperture 25 is set smaller than a calculated pupil region determined by the pixel size of each of the first detector 11 and the second detector 12. The light flux to be inspected and the reference light flux passed through the aperture 25 pass through a polarizer 26 so that the common polarized component is extracted. Then, the extracted common polarized component is separated into two light fluxes of the first light and the second light by a spectroscopic element 27. The interference signal generated by the first light is detected by the first detector 11 and the interference signal generated by the second light is detected by the second detector 12. Here, it is assumed that the first detector 11 and the second detector 12 are located at positions optically conjugated to the surface to be inspected 3a via the objective lens 24. In order to obtain a high-contrast interference signal from the first detector 11 and the second detector 12, it is preferable that the reference light flux reflected by the reference surface 14 and the light flux to be inspected reflected by the surface to be inspected 3a have the same intensity. Accordingly, the intensity may be adjusted by rotating the polarizer 26 by a separate rotation mechanism or the intensity may also be adjusted by using an ND filter (not shown) or the like. While, in the present embodiment, the extracted common polarized component is separated into two interference signals of the first light and the second light by using the spectroscopic element 27, an interference signal detected by a detector may also be separated by frequency separation by imparting different phase shift amounts (or frequency shift amounts) to the reference light fluxes of the first light and the second light. In other words, by virtue of such a configuration, the spectroscopic element 27 becomes unnecessary and two detectors provided for light fluxes of the first light and the second light can be integrated as one so that an apparatus configuration can be simplified.

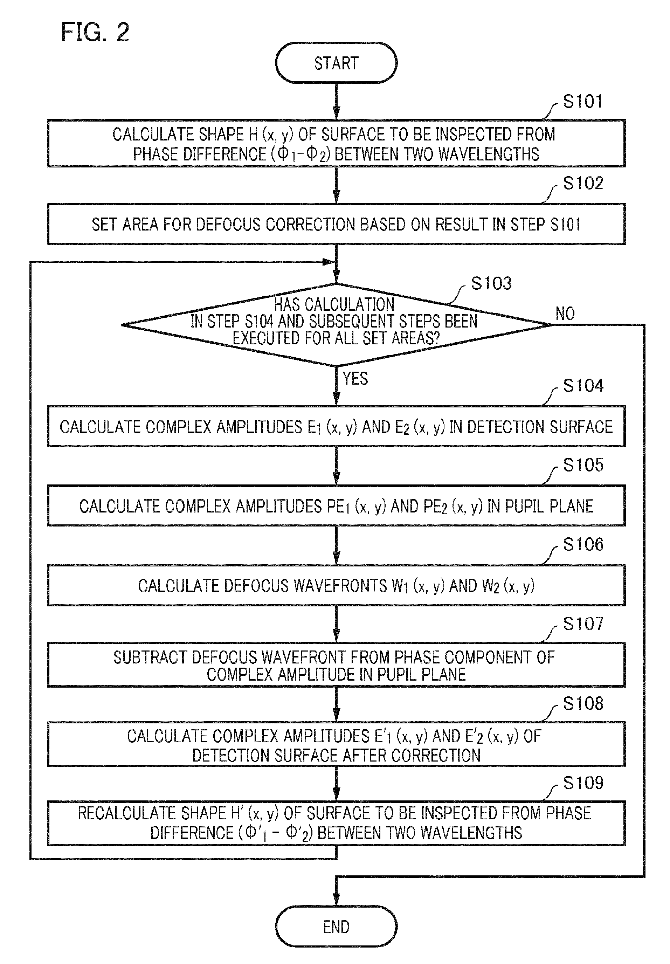

Next, a description will be given of calculation of the shape of the surface to be inspected 3a by the interference measuring apparatus 1. FIG. 2 is a flowchart illustrating the procedure of shape calculation as an interference measuring method. Firstly, the control unit 8 calculates the provisional shape H (x, y) of the surface to be inspected 3a from interference signals detected by the first detector 11 and the second detector 12, respectively (step S101). At this time, given that the phases of two wavelengths $\lambda_1$ and $\lambda_2$ calculated by an algorithm such as a four bucket method, a discrete Fourier transform method, or the like are $\Phi_1$ (x, y) and $\Phi_2$ (x, y), the shape H (x, y) is calculated by using a phase difference ($\Phi_1 - \Phi_2$) between two wavelengths using (Formula 4). Here, coordinates are represented by x and y. In (Formula 4), the synthesized wavelength λ is represented by $\lambda = \lambda_1 \times \lambda_2 / (\lambda_1 - \lambda_2)$.

[Formula 4]

$$H(x,y) = \frac{\Lambda}{4\pi}\left(\phi_1(x,y) - \phi_2(x,y)\right)$$

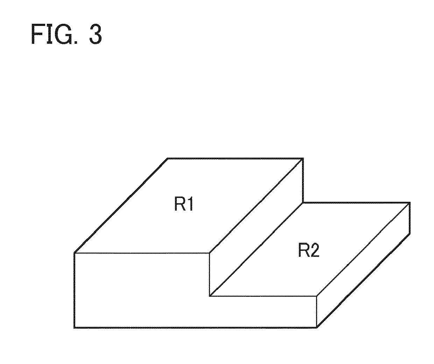

Next, the control unit 8 sets an area for defocus correction (step S102). Here, defocus correction is performed for each of areas in which the defocus amount is regarded to be approximately the same amount for each other. In other words, the control unit 8 divides the surface area of the surface to be inspected 3a into areas in which the height of the surface to be inspected 3a is regarded to be approximately the same as each other based on the shape H (x, y) of the surface to be inspected 3a calculated in step S101. FIG. 3 is a schematic perspective view illustrating an shape of the object 3. When the object 3 has a shape as shown in FIG. 3, that is, when there are two areas R1 and R2 on the surface to be inspected 3a, the surface area of the surface to be inspected 3a is divided into two areas R1 and R2.

Next, the control unit 8 repeats calculation in the following steps S104 to S109 for each area (set area) divided in step S102 until the calculation is completed for all set areas. Firstly, the control unit 8 determines whether or not calculation in step S104 and subsequent steps has been executed for all set areas (step S103). Here, when the control unit 8 determines that calculation in step S104 and subsequent steps has not been executed for all set areas (YES in step S103), the process shifts to step S104. On the other hand, when the control unit 8 determines that calculation in step S104 and subsequent steps has been executed for all set areas (NO in step S103), all the calculation is ended. There is no need to perform defocus correction for an area having a small defocus amount. In this case, the control unit 8 sets the shape measurement result H (x, y) calculated in step S101 as the final result, and thus, calculation in step S104 and subsequent steps will be omitted.

Next, the control unit 8 calculates the complex amplitudes $E_1$ (x, y) and $E_2$ (x, y) in the detection surfaces of the first detector 11 and the second detector 12, respectively (step S104). At this time, an amplitude component $A_1$ (x, y) is calculated by (Formula 5) using a bias component $B_1$ (x, y) and a contrast $C_1$ (x, y) of an interference signal detected by the first detector 11 and an amplitude component $A_2$ (x, y) is calculated by using a bias component $B_2$ (x, y) and a contrast $C_2$ (x, y) of an interference signal detected by the second detector 12 using (Formula 5). Here, it is assumed that the amplitude distribution of the reference light flux is uniform across a screen for ease of explanation.

[Formula 5]

$$A_k(x,y) = B_k(x,y) \cdot C_k(x,y) \qquad (k = 1,2)$$

Then, the complex amplitudes $E_1$ (x, y) and $E_2$ (x, y) of a detection surface are calculated by using the amplitude components $A_1$ (x, y) and $A_2$ (x, y) and the phase components $\Phi_1$ (x, y) and $\Phi_2$ (x, y) calculated in step S101, respectively, using (Formula 6).

[Formula 6]

$$E_k(x,y) = A_k(x,y) \cdot \exp(i\phi_k(x,y)) \qquad (k = 1,2)$$

Next, the control unit 8 calculates the complex amplitudes $PE_1$ (u, v) and $PE_2$ (u, v) in the pupil plane (pupil position) of the objective lens 24 (step S105). The complex amplitudes $PE_1$ (u, v) and $PE_2$ (u, v) in the pupil plane are calculated on the basis of Fourier transform of the complex amplitudes $E_1$ (x, y) and $E_2$ (x, y) calculated in step S104 using (Formula 7). Here, the symbol "M" represents the number of pixels in the X direction, the symbol "N" represents the number of pixels in the Y direction, and the pupil spatial coordinates are represented by u and v.

[Formula 7]

$$PE_k(u,v) = \sum_{x=0}^{M-1}\sum_{y=0}^{N-1} E_k(x,y)\exp\left\{-i2\pi\left(\frac{ux}{M} + \frac{vy}{N}\right)\right\} \qquad (k = 1,2)$$

Next, the control unit 8 calculates defocused wavefronts $W_1$ (u, v) and $W_2$ (u, v) (step S106). At this time, the control unit 8 firstly calculates and determines defocus amount $\Delta z$ based on the shape H (x, y) of the surface to be inspected 3a calculated in step S101 and the predetermined known best focus position (reference position). Then, the defocused wavefronts $W_1$ (u, v) and $W_2$ (u, v) are calculated by using the wavelength $\lambda_k$ and the focal length f of the objective lens 24 by (Formula 8). For example, the defocus amount $\Delta z$ is calculated on the basis of a difference between the shape H (x, y) of the surface to be inspected 3a and the predetermined known best focus position (reference position).

[Formula 8]

$$W_k(u,v) = \frac{\pi \Delta z (u^2 + v^2)}{\lambda_k f^2} \qquad (k = 1,2)$$

Next, the control unit 8 performs correction by subtracting the values of the defocused wavefronts $W_1$ (u, v) and $W_2$ (u, v) from the values of the phase components of the complex amplitudes $PE_1$ (u, v) and $PE_2$ (u, v) in the pupil plane, respectively, using (Formula 9) (step S107). In this manner, the complex amplitudes $PE_1$' (u, v) and $PE_2$' (u, v) in the pupil plane in which the phase component is corrected are calculated.

[Formula 9]

$$PE_k'(u,v) = PE_k'(u,v) - \exp(iW_k) \qquad (k = 1,2)$$

Next, the control unit 8 calculates the complex amplitudes $E_1$' (x, y) and $E_2$' (x, y) of the corrected detection surface (step S108). At this time, the complex amplitudes $E_1$' (x, y) and $E_2$' (x, y) are calculated on the basis of reverse Fourier transform of the complex amplitudes $PE_1$' (u, v) and $PE_2$' (u, v) in the pupil plane corrected in step S107 using (Formula 10).

[Formula 10]

$$E_k'(u,v) = \frac{1}{MN} \sum_{u=0}^{M-1} \sum_{v=0}^{N-1} PE_k'(x,y) \exp\left\{ i2\pi \left( \frac{ux}{M} + \frac{vy}{N} \right) \right\} \qquad (k = 1,2)$$

Next, the control unit 8 recalculates the shape H' (x, y) of the corrected surface to be inspected 3a (step S109). At this time, the control unit 8 firstly calculates the phase components $\Phi_1$' (x, y) and $\Phi_2$' (x, y) from the complex amplitudes $E_1$' (x, y) and $E_2$' (x, y) of the detection surface calculated in step S108. Then, the control unit 8 calculates the shape H' (x, y) of the surface to be inspected 3a by using a phase difference ($\Phi_1$' - $\Phi_2$') between two wavelengths using (Formula 11).

[Formula 11]

$$H'(x,y) = \frac{\Lambda}{4\pi} \left( \phi_1'(x,y) - \phi_2'(x,y) \right)$$

As described above, the interference measuring apparatus 1 can correct a decrease in correlation of speckle pattern between two wavelengths caused by defocus. Thus, even when the surface to be inspected 3a is not aligned with the focus position of the objective lens 24, the interference measuring apparatus 1 can measure a rough surface with high accuracy.

As described above, according to the present embodiment, an interference measuring apparatus that is advantageous for accurately measuring a surface to be inspected even when the surface to be inspected is a rough surface may be provided.

Second Embodiment

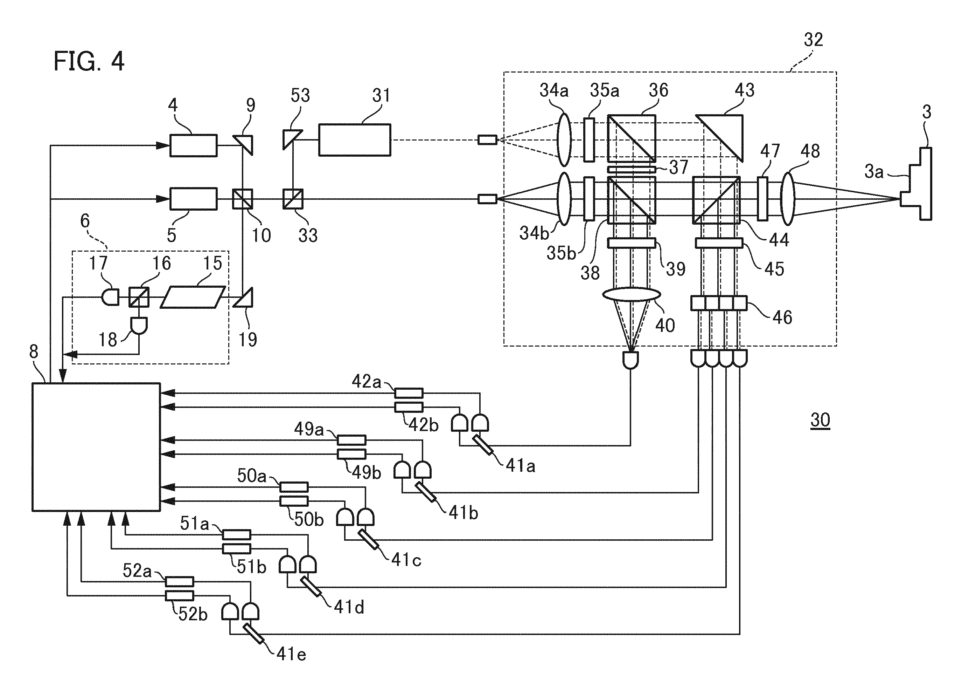

Next, a description will be given of an interference measuring apparatus according to a second embodiment of the present invention. FIG. 4 is a schematic diagram illustrating a configuration of an interference measuring apparatus 30 according to the present embodiment. Although the interference measuring apparatus 1 of the first embodiment measures the shape of the surface to be inspected 3a all at once, a feature of the interference measuring apparatus 30 lies in the fact that single-point distance (length measurement distance) is calculated at high speed. In the interference measuring apparatus 30, a stage device (not shown) is disposed and the surface to be inspected 3a is movable in a planar direction (XY plane) while the object 3 is placed on the stage device, so that the shape of the surface to be inspected 3a can be measured as in the first embodiment. Furthermore, in the interference measuring apparatus 30, a galvano mirror instead of a stage device is disposed between the interferometer and the surface to be inspected 3a so as to change a length measurement point as appropriate, so that the shape of the surface to be inspected 3a can be measured as in the first embodiment. In the interference measuring apparatus 30 exemplified in the present embodiment, the first light source 4 and the second light source 5 and the wavelength control unit 6 have the same configuration as those in the first embodiment. Accordingly, the same elements as those in the first embodiment are designated by the same reference numerals and explanation thereof will be omitted. A description will be given of a part after division of the light fluxes of the first light and the second light by the beam splitter 10. In particular, the interference measuring apparatus 30 is different from the interference measuring apparatus 1 of first embodiment in that the interference measuring apparatus 30 includes a wavelength shifter 31, an interferometer unit 32 instead of the interferometer unit 7, and a plurality of spectroscopic elements and phase detectors disposed between the interferometer unit 32 and the control unit 8.

The light flux which is divided by the beam splitter 10 and then is guided into the interferometer unit 32 is further divided into two light fluxes by a polarization beam splitter 33. Among them, one of two light fluxes is reflected by a mirror 53 and then enters the wavelength shifter 31. The wavelength shifter 31 applies a certain amount of frequency shift to an incident wavelength by an acoustic optical element (not shown) for each light flux output from the first light and the second light. The light flux emitted from the wavelength shifter 31 enters the interferometer unit 32. On the other hand, the other of two light fluxes divided by the polarization beam splitter 33 enters the interferometer unit 32 separately from the light flux emitted from the wavelength shifter 31.

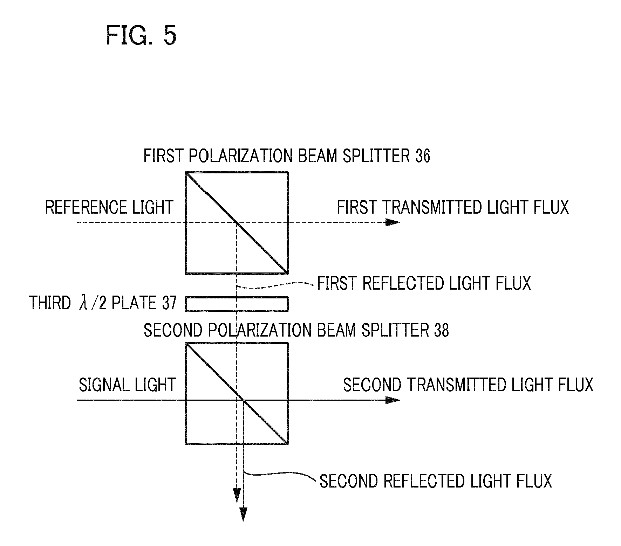

The light flux (reference light) that passes through the wavelength shifter 31 and then enters the interferometer unit 32 is converted into a parallel light flux by a first collimator lens 34a. The parallel light flux passes through a first $\lambda/2$ plate 35a and then enters a first polarization beam splitter 36. FIG. 5 is a schematic diagram illustrating a part of the configuration of the interferometer unit 32 including the first polarization beam splitter 36 and a second polarization beam splitter 38 to be described below. As shown in FIG. 5, the parallel light flux is divided into a first reflected light flux and a first transmitted light flux by the first polarization beam splitter 36. Among them, the first reflected light flux passes through a third $\lambda/2$ plate 37 so that the polarizing direction is rotated by 90 degrees. Furthermore, the first reflected light flux passes through the second polarization beam splitter 38 and a first polarizer 39 and then is collected by a collecting lens 40. Then, the first reflected light flux enters a first spectroscopic element 41a.

The light flux (signal light) that enters the interferometer unit 32 without the intermediary of the wavelength shifter 31 is converted into a parallel light flux by a second collimator lens 34b. The parallel light flux passes through a second $\lambda/2$ plate 35b and then is divided into a second reflected light flux and a second transmitted light flux by the second polarization beam splitter 38. Among them, the second reflected light flux passes through the first polarizer 39 and is collected by the collecting lens 40. Then, the second reflected light flux enters the first spectroscopic element 41a. Here, the rotational direction with respect to the optical axis of the first $\lambda/2$ plate 35a is set such that a light quantity ratio between the first reflected light flux and the first transmitted light flux is a desired value. Likewise, the rotational direction with respect to the optical axis of the second $\lambda/2$ plate 35b is set such that a light quantity ratio between the second reflected light flux and the second transmitted light flux is a desired value. At this time, in order to maximize contrast of the interference signals of the first reflected light flux and the second reflected light flux, it is preferable that the quantities of light of the first reflected light flux are approximately equal to that of the second reflected light flux. The first spectroscopic element 41a separates the light fluxes of the first light and the second light that are coaxially shone. Furthermore, a first phase detector 42a and a second phase detector 42b extract the common polarized component of the first reflected light flux and the second reflected light flux by the polarizer 39 to thereby obtain an interference signal. More specifically, the first phase detector 42a detects a beat signal corresponding to a frequency difference between two light fluxes as an interference signal between the first reflected light flux and the second reflected light flux of the wavelength $\lambda_1$ via the first spectroscopic element 41a. Likewise, the second phase detector 42b detects a beat signal corresponding to a frequency difference between two light fluxes as an interference signal between the first reflected light flux and the second reflected light flux of the wavelength $\lambda_2$ via the first spectroscopic element 41a. Hereinafter, an interference signal detected by each of the first phase detector 42a and the second phase detector 42b is referred to as a "reference signal".

On the other hand, the first transmitted light flux divided by the first polarization beam splitter 36 is reflected by a mirror 43. After passing through a third polarization beam splitter 44 and a second polarizer 45, the first transmitted light flux enters a microlens array 46. Also, the second transmitted light flux divided by the second polarization beam splitter 38 passes through the third polarization beam splitter 44 and then is changed into circularly polarized light by a λ/4 plate 47. Then, the second transmitted light flux is a light flux diverged by an objective lens 48 and then is collected on the surface to be inspected 3a. The second transmitted light flux which is reflected by the surface to be inspected 3a and then is changed into reverse circularly polarized light passes through the λ/4 plate 47 again. Consequently, the second transmitted light flux is changed into linearly polarized light having a polarization plane rotated by 90 degrees from that upon incidence and then enters the third polarization beam splitter 44 again. Then, the second transmitted light flux is reflected by the third polarization beam splitter 44. After passing through the second polarizer 45, the second transmitted light flux enters the microlens array 46 so that the light flux is divided into a plurality of pixels. Here, FIG. 4 illustrates an example in which the light flux is divided into four pixels in one direction for ease of explanation, but the light flux is actually divided into pixels in a two-dimensional matrix. The second transmitted light flux divided by the microlens array 46 independently enters the spectroscopic elements 41b to 41e via an optical fiber. The optical fiber used herein may be a plurality of fibers or may also be a bundle fiber. Hereinafter, the first transmitted light flux divided by the first polarization beam splitter 36 is referred to as a "reference light flux" and the light flux reflected by the surface to be inspected 3a is referred to as a "light flux to be inspected". Also, in the present embodiment, in order to obtain a high-contrast interference signal from a group of the following detectors (a third detector 49a, a fourth detector 49b, and the like), it is preferable that the reference light flux and the light flux to be inspected have the same intensity. Accordingly, the intensity may be adjusted by rotating the second polarizer 45 by a separate rotation mechanism or the intensity may also be adjusted by using an ND filter (not shown) or the like.

The interference signals of the reference light flux and the light flux to be inspected of the wavelength $\lambda_1$ incident on the spectroscopic elements 41b to 41e are detected by the third detector 49a, a fifth detector 50a, a seventh detector 51a, and a ninth detector 52a, respectively. On the other hand, the interference signals of the reference light flux and the light flux to be inspected of the wavelength $\lambda_2$ incident on the spectroscopic elements 41b to 41e are detected by the fourth detector 49b, a sixth detector 50b, an eighth detector 51b, and a tenth detector 52b, respectively. Hereinafter, an interference signal detected by each detector is referred to as a "measurement signal". The measurement signal is a beat signal corresponding to a frequency difference between two light fluxes as an interference signal between the first transmitted light flux and the second transmitted light flux but the phase of the interference signal is different from that of the reference signal due to an optical path length between the light flux to be inspected and the reference light flux. Accordingly, in the present embodiment, the control unit 8 calculates a difference between the phase of the measurement signal and the phase of the reference signal, and then calculates and determines the phases $\Phi_1$ and $\Phi_2$ corresponding to the wavelengths $\lambda_1$ and $\lambda_2$ based on the phase difference.

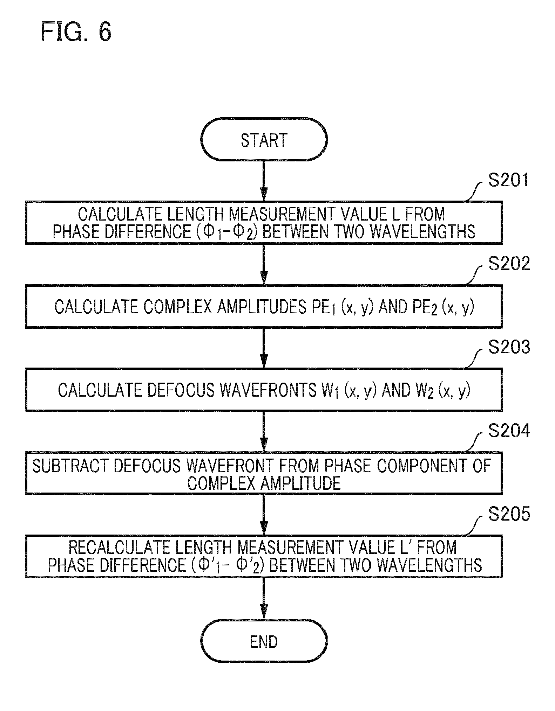

Next, a description will be given of calculation of a length measurement value for the surface to be inspected 3a by the interference measuring apparatus 30. FIG. 6 is a flowchart illustrating the procedure of length measurement value calculation as the interference measuring method of the present embodiment, where the flowchart shown in FIG. 6 corresponds to that of the first embodiment in FIG. 2. Hereinafter, explanation of the same steps as those in the first embodiment will be omitted but a description will be given of the difference from the first embodiment. Firstly, a first difference from the first embodiment is a method for calculating a length measurement value L in steps S201 and S205. In the present embodiment, the control unit 8 calculates the length measurement value L using an average phase measured by a plurality of detectors (the first detector 42a, the second detector 42b, and the third detector 49a to the tenth detector 52b) located on the pupil plane. In the present embodiment, a second difference from the first embodiment is that Fourier transform for calculating complex amplitude at a pupil position in steps S104 and S105 in the first embodiment becomes unnecessary and the process in step S108 also becomes unnecessary. In other words, while, in the first embodiment, Fourier transform needs to be performed for calculating complex amplitude at a pupil position because the first detector 11 and the second detector 12 are located at positions conjugate with the surface to be inspected 3a, whereas in the present embodiment, measurement is performed at the pupil position of the objective lens 48, and thus, Fourier transform does not need to be performed.

As described above, the interference measuring apparatus 30 employs a polarization beam splitter which can divide a light flux into polarization components as a light flux dividing element of the interferometer unit 32 so as to separate reference light and signal light by polarization. In the interference measuring apparatus 30, a slight frequency shift difference is added between the two light components whose polarization directions are perpendicular to each other using the wavelength shifter 31 so that heterodyne detection can be performed, resulting in realization of highly-accurate phase measurement. According to the present embodiment, the interference measuring apparatus 30 can correct a decrease in correlation of speckle pattern between two wavelengths caused by defocus as in the first embodiment. Thus, even when the surface to be inspected 3a is not aligned with the focus position of the objective lens 48, the interference measuring apparatus 30 can measure a rough surface with high accuracy.

While the present invention has been described with reference to embodiments, it is to be understood that the invention is not limited to the disclosed embodiments. Other embodiments are set out in the following numbered statements. The claims follow the numbered statements and are labelled as such.

Statement 1. An interference measuring apparatus (1) that measures a distance to a surface to be inspected (3a) using a plurality of light fluxes whose wavelengths are different from each other, the interference measuring apparatus comprising:

a light dividing unit (13) configured to divide each of the plurality of light fluxes into light to be inspected and reference light;
an objective lens (24) through which the light to be inspected is transmitted;
a photoelectric conversion element (11,12) configured to receive interference light between the light to be inspected and the reference light for each of the plurality of light fluxes and output an interference signal obtained by converting the interference light into an electrical signal; and
a calculation unit (8) configured to calculate the distance based on a phase obtained by subtracting a defocus wavefront from a phase component of complex amplitude at the pupil position of the objective lens (24) for each of the plurality of light fluxes by using the interference signal.

Statement 2. The interference measuring apparatus according to statement 1, wherein, when the defocus wavefront is represented by W, a defocus amount from a predetermined reference position is represented by $\Delta z$, a wavelength of the light is represented by X, a focal length of the objective lens is represented by f, and pupil spatial coordinates are represented by u and v, the defocus wavefront is calculated from the following formula:

[Formula 1]

$$W(u,v) = \frac{\pi \Delta z \left(u^2 + v^2\right)}{\lambda f^2}$$

Statement 3. The interference measuring apparatus according to statement 2, wherein the calculation unit executes the calculation for each of a plurality of areas, in which the defocus amount on the surface to be inspected is different from each other, on the surface to be inspected.

Statement 4. The interference measuring apparatus according to statement 2, wherein the calculation unit executes the calculation for each area in which the defocus amount on the surface to be inspected is regarded to be the same amount for each other.

Statement 5. The interference measuring apparatus according to statement 1, wherein the photoelectric conversion element is located at a position conjugate with the surface to be inspected, and the calculation unit determines complex amplitude in the pupil plane of the objective lens by Fourier transform of complex amplitude of light on the detection surface of the photoelectric conversion element.

Statement 6. The interference measuring apparatus according to statement 1, wherein the photoelectric conversion element is located at the pupil position of the objective lens.

Statement 7. The interference measuring apparatus according to statement 2, wherein the calculation unit calculates a provisional distance using the interference signal and then calculates the defocus amount based on the provisional distance and the reference position.

Statement 8. An interference measuring method for measuring a distance to a surface to be inspected (3a) using a plurality of light fluxes whose wavelengths are different from each other, the interference measuring method comprising:

dividing each of the plurality of light fluxes into light to be inspected and reference light and converting interference light between the light to be inspected and the reference light for each of the plurality of light fluxes into an electrical signal to thereby obtain an interference signal; and
calculating the distance based on a phase obtained by subtracting a defocus wavefront from a phase component of complex amplitude at the pupil position of an objective lens (24) through which the light to be inspected is transmitted for each of the plurality of light fluxes by using the interference signal.

**Claims**

1. An interference measuring apparatus (1) for measuring a distance to a surface to be inspected (3a) using a plurality of light fluxes whose wavelengths are different from each other, the interference measuring apparatus comprising:

   a light dividing unit (13) for dividing each of the plurality of light fluxes into light to be inspected and reference light;
   an objective lens (24) for transmitting through the light to be inspected;
   a photoelectric conversion element (11,12) for receiving interference light between the light to be inspected and the reference light for each of the plurality of light fluxes and output an interference signal obtained by converting the interference light into an electrical signal; and
   a calculation unit (8) for calculating the distance to the surface to be inspected based on a phase obtained by subtracting a defocused wavefront from a phase component of a complex amplitude at the pupil position of the objective lens (24) through which light to be inspected has been transmitted for each of the plurality of light fluxes by using the interference signal.

2. The interference measuring apparatus according to claim 1, wherein, the defocused wavefront is calculated from the following formula:

$$W(u,v) = \frac{\pi \Delta z \left(u^2 + v^2\right)}{\lambda f^2}$$

   where the defocused wavefront is represented by W, a defocus amount from a predetermined reference position is represented by $\Delta z$, a wavelength of the light is represented by $\lambda$, a focal length of the objective lens is represented by f, and pupil spatial coordinates are represented by u and v.

3. The interference measuring apparatus according to claim 2, wherein the calculation unit is arranged to execute the calculation for each of a plurality of areas on the surface to be inspected in which the defocus amount for each area on the surface to be inspected is different from each other amount.

4. The interference measuring apparatus according to claim 2, wherein the calculation unit is arranged to execute the calculation for each area in which the defocus amount on the surface to be inspected is regarded to be the same amount for each other.

5. The interference measuring apparatus according to claim 1, wherein the photoelectric conversion element is located at a position conjugate with the surface to be inspected, and the calculation unit is arranged to determine a complex amplitude in the pupil plane of the objective lens by Fourier transform of a complex amplitude of light on the detection surface of the photoelectric conversion element.

6. The interference measuring apparatus according to claim 1, wherein the photoelectric conversion element is located at the pupil position of the objective lens.

7. The interference measuring apparatus according to claim 2, wherein the calculation unit is arranged to calculate a provisional distance using the interference signal and then calculate the defocus amount based on the provisional distance and the reference position.

8. An interference measuring method for measuring a distance to a surface to be inspected (3a) using a plurality of light fluxes whose wavelengths are different from each other, the interference measuring method comprising:

   dividing each of the plurality of light fluxes into light to be inspected and reference light and converting interference light between the light to be inspected and the reference light for each of the plurality of light fluxes into an electrical signal to thereby obtain an interference signal; and
   calculating the distance to the surface to be inspected based on a phase obtained by subtracting a defocused wavefront from a phase component of complex amplitude at the pupil position of an objective lens (24) through which the light to be inspected is transmitted for each of the plurality of light fluxes by using the interference signal.

FIG. 1

## FIG. 2

START

S101

CALCULATE SHAPE H (x, y) OF SURFACE TO BE INSPECTED FROM PHASE DIFFERENCE ($\Phi_1 - \Phi_2$) BETWEEN TWO WAVELENGTHS

S102

SET AREA FOR DEFOCUS CORRECTION BASED ON RESULT IN STEP S101

S103

HAS CALCULATION IN STEP S104 AND SUBSEQUENT STEPS BEEN EXECUTED FOR ALL SET AREAS?

NO

YES

S104

CALCULATE COMPLEX AMPLITUDES $E_1$ (x, y) AND $E_2$ (x, y) IN DETECTION SURFACE

S105

CALCULATE COMPLEX AMPLITUDES $PE_1$ (x, y) AND $PE_2$ (x, y) IN PUPIL PLANE

S106

CALCULATE DEFOCUS WAVEFRONTS $W_1$ (x, y) AND $W_2$ (x, y)

S107

SUBTRACT DEFOCUS WAVEFRONT FROM PHASE COMPONENT OF COMPLEX AMPLITUDE IN PUPIL PLANE

S108

CALCULATE COMPLEX AMPLITUDES $E'_1$ (x, y) AND $E'_2$ (x, y) OF DETECTION SURFACE AFTER CORRECTION

S109

RECALCULATE SHAPE H' (x, y) OF SURFACE TO BE INSPECTED FROM PHASE DIFFERENCE ($\Phi'_1 - \Phi'_2$) BETWEEN TWO WAVELENGTHS

END

FIG. 3

FIG. 4

FIG. 5

FIRST POLARIZATION BEAM SPLITTER 36

REFERENCE LIGHT --------- FIRST TRANSMITTED LIGHT FLUX

------- FIRST REFLECTED LIGHT FLUX

THIRD $\lambda$/2 PLATE 37

SECOND POLARIZATION BEAM SPLITTER 38

SIGNAL LIGHT ——— SECOND TRANSMITTED LIGHT FLUX

SECOND REFLECTED LIGHT FLUX

## FIG. 6

START

↓

CALCULATE LENGTH MEASUREMENT VALUE L FROM
PHASE DIFFERENCE ($\Phi_1 - \Phi_2$) BETWEEN TWO WAVELENGTHS  — S201

↓

CALCULATE COMPLEX AMPLITUDES $PE_1$ (x, y) AND $PE_2$ (x, y)  — S202

↓

CALCULATE DEFOCUS WAVEFRONTS $W_1$ (x, y) AND $W_2$ (x, y)  — S203

↓

SUBTRACT DEFOCUS WAVEFRONT FROM PHASE COMPONENT OF
COMPLEX AMPLITUDE  — S204

↓

RECALCULATE LENGTH MEASUREMENT VALUE L' FROM
PHASE DIFFERENCE ($\Phi'_1 - \Phi'_2$) BETWEEN TWO WAVELENGTHS  — S205

↓

END

FIG. 7

FIG. 8

Europäisches
Patentamt

European
Patent Office

Office européen
des brevets

**EUROPEAN SEARCH REPORT**

Application Number

EP 13 19 6082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/075151 A1 (JEONG HWAN J [US]) 31 March 2011 (2011-03-31) * abstract; figure 28 * * paragraphs [0117], [0224] - paragraph [0226] * * paragraph [0242] - paragraph [0254] * | 1-8 | INV. G01B9/02 G01B11/30 G01B11/24 |
| Y,D | ICHIROU YAMAGUCHI ET AL: "Speckle Decorrelation in Surface Profilometry by Wavelength Scanning Interferometry", APPLIED OPTICS, vol. 37, no. 28, 1 October 1998 (1998-10-01), page 6721, XP055104064, ISSN: 0003-6935, DOI: 10.1364/AO.37.006721 * the whole document * | 1-8 | |
| Y | US 5 633 714 A (NYYSSONEN DIANA [US]) 27 May 1997 (1997-05-27) * abstract; figures 1a-1c * * column 4 - column 7 * | 1-8 | |

TECHNICAL FIELDS
SEARCHED     (IPC)

G01B

The present search report has been drawn up for all claims

| Place of search | Date of completion of the search | Examiner |
|---|---|---|
| Munich | 27 February 2014 | Stanciu, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 19 6082

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2014

| Patent document cited in search report | | Publication date | Patent family member(s) | Publication date |
|---|---|---|---|---|
| US 2011075151 | A1 | 31-03-2011 | NONE | |
| US 5633714 | A | 27-05-1997 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. F. FERCHER ; H. Z. HU ; U. VRY.** Rough surface interferometry with a two-wavelength heterodyne speckle interferometer. *Applied Optics,* 1985, vol. 24 (14), 2181-2188
- **U. VRY ; F. FERCHER.** High-order statistical properties of speckle fields and their application rough-surface interferometry. *J. Opt. Soc. Am. A,* 1986, vol. 3 (7), 988-1000
- **I. YAMAGUCHI ; A. YAMAMOTO ; S. KUWAMURA.** Speckle decorrelation in surface profilometry by wavelength scanning interferometry. *Applied Optics,* 1998, vol. 37 (28), 6721-6728